# EUROPÄISCHE PATENTSCHRIFT

(11) **EP 0 482 463 B1**
(45) Veröffentlichungstag und Bekanntmachung des Hinweises auf die Patenterteilung: **03.08.1994**
(21) Anmeldenummer: 91117473.8
(22) Anmeldetag: 14.10.1991
(51) Int. Cl.: A01G 9/02

(54) **Trog für Pflanzentöpfe**
Trough for plant pots
Auge pour pots de plantes

(30) Priorität: 26.10.1990 DE 9014844 U
(43) Veröffentlichungstag der Anmeldung: 29.04.1992
(73) Patentinhaber: FISCHER, Ralf Rüdiger, D-63110 Rodgau (DE); FISCHER, Bernd, D-63110 Rodgau (DE)
(72) Erfinder: FISCHER, Ralf Rüdiger, D-63110 Rodgau (DE); FISCHER, Bernd, D-63110 Rodgau (DE)
(74) Vertreter: Katscher, Helmut, Dipl.-Ing.

(56) Entgegenhaltungen:
- WO-A-90/05447
- DE-A- 3 312 330
- FR-A- 1 346 075

## Beschreibung

Die Erfindung betrifft einen Trog zur Aufnahme von Planzentöpfen, mit einem Trogboden und Trogseitenwänden, die mit Halteausnehmungen versehen sind.

Derartige Tröge, die auch als Kulturrinnen bezeichnet werden, sind bekannt (DE-OS 27 32 982). Sie dienen dazu, eine Reihe von Planzentöpfen aufzunehmen, in denen Pflanzen in Gewächshäusern oder im Freien kultiviert werden. Die Tröge dienen zugleich als Bewässerungsrinnen. Am oberen Ende der leicht abfallend angeordneten Tröge wird Wasser, gegebenenfalls mit darin gelöstem Düngemittel, zugegeben, das zum unteren Ende des Troges fließt. Da die Pflanzentöpfe auf dem Trogboden stehen, nehmen die Pflanzen das Wasser und das Düngemittel auf. Vom unteren Trogende gelangt das Wasser in eine Sammelrinne und wird von dort im Kreislauf wieder zu einer Zuführeinrichtung gepumpt, die das Wasser den Trögen jeweils am oberen Trogende zuführt.

Die bekannten Tröge dieser Gattung sind durchgehend glatt ausgeführt und bieten den Pflanzentöpfen daher zumindest in Troglängsrichtung keinen wesentlichen Halt. Die bekannten Tröge sind daher nur für die Verwendung in Gewächshäusern vorgesehen und geeignet. Beim Einsatz in Freilandkulturen sind die Pflanzentöpfe jedoch den Windkräften ausgesetzt und können umfallen oder mindestens so weit gekippt werden, daß der Topfboden den Trogboden nicht mehr flächig berührt, wodurch die Wasseraufnahme unterbrochen wird.

Deshalb ist bei bekannten, jedoch nicht zum Stand der Technik zu zählenden Trögen der eingangs genannten Gattung (WO 90/05447 & DE-OS 38 39 664) vorgeschlagen worden, daß von den beiden Trogseitenwänden Halteelemente gegeneinander vorspringen, die die Pflanzentöpfe in Troglängsrichtung im Abstand zueinander halten, um ein Umfallen oder Kippen der Pflanzentöpfe zu verhindern. Diese Halteelemente können gemäß dem älteren Vorschlag von den Oberkanten der beiden Trogseitenwände gegeneinander vorspringende Halteflansche sein, in denen in Troglängsrichtung im Abstand zueinander Halteausnehmungen für die Pflanzentöpfe ausgebildet sind. Zusätzlich können aus den Trogseitenwänden Haltelaschen ausgestanzt und nach innen gebogen sein, um die Pflanzentöpfe zu halten. Gemäß einer anderen Ausführungsform dieses älteren Vorschlags können die Trogseitenwände mit nach innen ragenden, tiefgezogenen Formvorsprüngen versehen sein, die zwischen sich die Pflanzentöpfe halten. Die Herstellung dieser Tröge ist jedoch verhältnismäßig aufwendig.

Aufgabe der Erfindung ist es, einen Trog der eingangs genannten Gattung zu schaffen, der auch bei der Verwendung in Freilandkulturen eine so sichere Aufnahme der Pflanzentöpfe ermöglicht, daß diese auch bei Sturm nicht kippen oder umfallen können, auch wenn zwischen benachbarten Pflanzentöpfen Abstände eingehalten werden. Außerdem soll der Trog einfach und mit geringen Kosten herzustellen sein.

Diese Aufgabe wird erfindungsgemäß dadurch gelöst, daß von jeder Trogseitenwand eine längsverlaufende Sicke zum Troginneren vorspringt und daß Halteausnehmungen für die Pflanzentöpfe aus den Sicken ausgeschnitten sind.

Diese Sicken mit den darin vorgesehenen Ausschnitten zur Aufnahme der Pflanzentöpfe bilden einfach herzustellende, stabile Halteelemente für die Pflanzentöpfe. Der Herstellvorgang besteht aus verhältnismäßig einfachen Fertigungsschritten, wobei zuerst in dem noch flachliegenden Material, beispielsweise einem Blechstreifen, Löcher ausgestanzt werden, die später die Halteausnehmungen für die Pflanzentöpfe bilden. Anschließend wird der Blechstreifen nur noch so profiliert, beispielsweise durch Abkanten oder Walzen, daß er das vorgesehene Trogprofil erhält. Eine nachträgliche Bearbeitung ist nicht erforderlich, weil die Halteausnehmungen bereits ausgebildet sind.

Die Halteausnehmungen berühren die Pflanzentöpfe längs einer Linie, die sich nicht nur um einen Teil des Topfumfangs, sondern - je nach der Querschnittsgestaltung der Sicke - auch über einen Bereich der Höhe des Pflanzentopfes erstreckt. Dadurch wird ein Kippen des Pflanzentopfes wirksam verhindert.

Der Trog ist von sehr einfachem Aufbau, weil er einstückig ist und keine zusätzlichen Halteelemente aufgesteckt oder angebracht werden müssen.

Durch die in den Trogseitenwänden verlaufenden Sicken erfolgt eine zusätzliche Versteifung, die die Verwendung verhältnismäßig dünnen Materials ermöglicht, auch wenn diese Sicken teilweise angeschnitten sind.

Vorzugsweise werden die Halteausnehmungen durch ausgestanzte Löcher im Bereich der inneren Kante der Sicke gebildet, d.h. die innere Kante der Sicke wird dort durch Abkanten gebildet, wo sich die bereits vorher ausgestanzten Löcher befinden, die dann die Halteausnehmungen bilden.

Gemäß einer besonders bevorzugten Ausführungsform der Erfindung ist vorgesehen, daß die Sicken im Querschnitt triangelförmig sind. Dadurch ergibt sich bei geringem Materialbedarf einerseits eine wirksame Versteifung der Trogseitenwand; andererseits erstreckt sich die Berührungslinie mit dem Pflanzentopf über eine verhältnismäßig große Fläche, so daß eine gute Stützwirkung erreicht wird.

Als besonders vorteilhaft hat sich eine Ausführungsform erwiesen, bei der sich über jeder Sicke ein oberer Seitenwandabschnitt abschließt, von dessen Oberkante jeweils ein Halteflansch nach innen vorspringt, in dem in Troglängsrichtung im Abstand zueinander Ausklinkungen zur Aufnahme der Pflanzentröge ausgespart sind. Diese Ausklinkungen der gegeneinander gerichteten Halteflansche stützen die Pflanzentöpfe in einem oberhalb der Sicken liegenden Bereich und ergeben dadurch eine weitere, sehr wirksame Stabilisierung der Pflanzentöpfe, wobei diese Maßnahmen ebenfalls mit geringem zusätzlichem Arbeits- und Materialaufwand erreicht werden. Hinzu kommt noch, daß die nach innen abgewinkelten Halteflansche eine zusätzliche Versteifung der Trogseitenwände bewirken.

Die Erfindung wird nachfolgend an Ausführungsbeispielen näher erläutert, die in der Zeichnung dargestellt sind. Es zeigt:
Fig. 1 in einem senkrechten Schnitt einen als Kulturrinne dienenden Trog zur Aufnahme von Pflanzentöpfen,
Fig. 2 in einem Schnitt ähnlich der Fig. 1 eine abgewandelte Ausführungsform des Troges,
Fig. 3 eine verkleinerte Seitenansicht eines Teilabschnitts des Troges nach Fig. 1 und
Fig. 4 eine Draufsicht auf den Trogabschnitt nach Fig. 3.

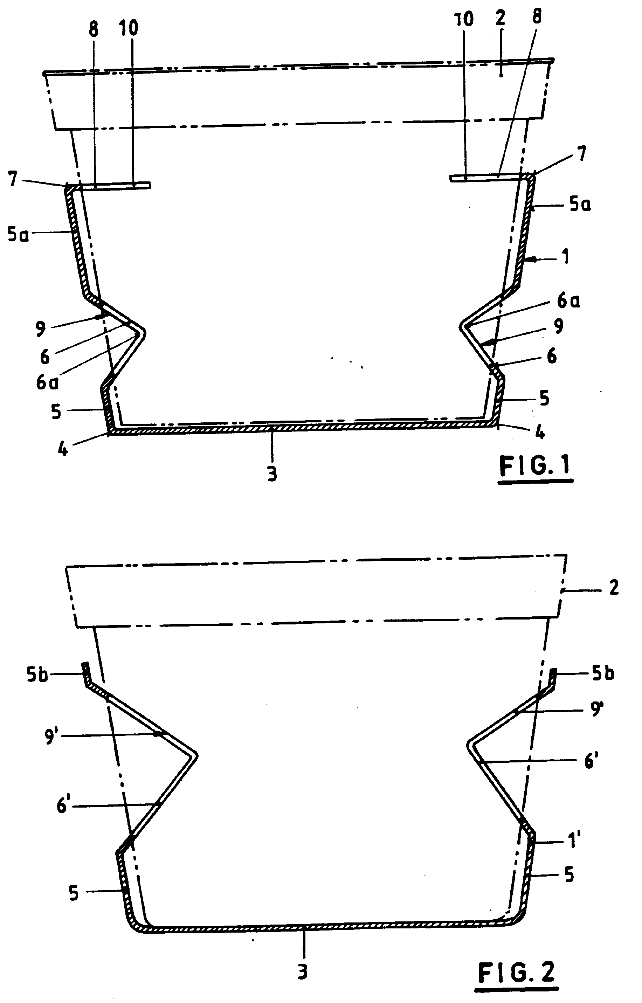

Der in den Fig. 1, 3 und 4 dargestellte Trog 1 dient als Kulturrinne und nimmt eine Reihe von schwarzen Pflanzentöpfen 2 jeweils im Abstand zueinander auf, die in der Zeichnung mit strichpunktierten Linien nur angedeutet sind. Bei dem dargestellten Ausführungsbeispiel besteht der Trog aus verzinktem Stahlblech. Stattdessen ist auch eine Ausführung aus anderen Materialien möglich, beispielsweise aus Aluminiumblech, Kunststoff oder kunststoffbeschichtetem Blech.

Der Trog 1 weist einen Trogboden 3 auf, der vorzugsweise eben ist, und von dessen beiden Längsrändern 4 sich jeweils eine Trogseitenwand 5 nach oben erstreckt.

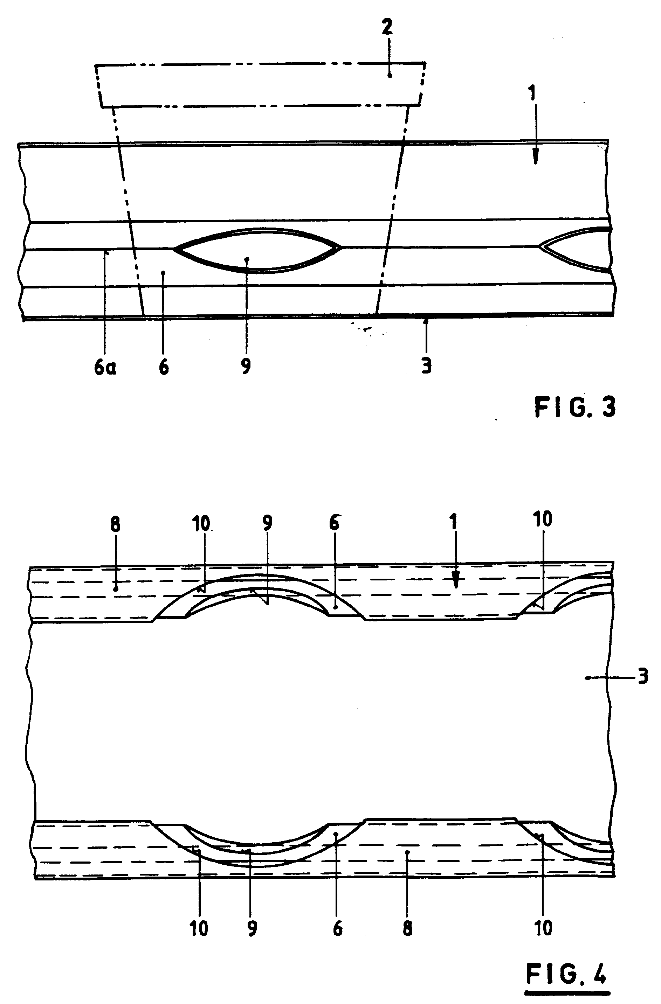

In jeder der beiden Trogseitenwände 5 ist eine nach innen ragende, im Querschnitt triangelförmige Sicke 6 ausgebildet. Über jeder Sicke 6 schließt sich ein oberer Seitenwandabschnitt 5a an, von dessen Oberkante 7 jeweils ein Halteflansch 8 nach innen vorspringt. Die beiden Halteflansche 8 sind beim Ausführungsbeispiel nach Fig. 1 horizontal auf gleicher Höhe angeordnet. Wie man besonders deutlich aus Fig. 3 erkennt, sind in den beiden Sicken 6 im Bereich der inneren Sickenkante 6a Löcher ausgestanzt, die Halteausnehmungen 9 für die aufzunehmenden Pflanzentöpfe 2 bilden. Die Halteausnehmungen 9 sind somit auch in den in jeder Trogseitenwand 5 längsverlaufenden Sicken 6 ausgeschnitten, die zum Troginneren vorspringen.

Bei dem Ausführungsbeispiel nach den Fig. 1, 3 und 4 sind in den beiden Halteflanschen 8 jeweils in Troglängsrichtung im Abstand zueinander Ausklinkungen 10 ausgespart, die ebenfalls zur Aufnahme der Pflanzentöpfe 2 dienen.

Bei diesem Ausführungsbeispiel nach den Fig. 1, 3 und 4 werden die Pflanzentöpfe 2 somit im unteren Bereich von den Rändern der Halteausnehmungen 9 und im Abstand darüber von den Rändern der Ausklinkungen 10 gehalten und gestützt.

Eine demgegenüber abgewandelte Ausführungsform zeigt Fig. 2 in einer Schnittdarstellung entsprechend der Fig. 1. Der in Fig. 2 gezeigte Trog 1′ unterscheidet sich von dem Trog 1 nach Fig. 1 im wesentlichen dadurch, daß die nach innen vorspringenden oberen Halteflansche 8 weggelassen sind. Stattdessen sind die beiden in den Trogseitenwänden 5 ausgebildeten, nach innen vorspringenden Sicken 6′ größer ausgeführt als beim Beispiel nach Fig. 1, so daß die Halteausnehmungen 9′ die Pflanzentöpfe 2 in einem größeren Bereich in Umfangsrichtung und in der Höhe stützen, so daß die Pflanzentöpfe auch hierbei ausreichend gehalten werden. Über den Sicken 6′ schließt sich beispielsweise nur noch ein kleiner Seitenwandstreifen 5b an.

Die Herstellung der als Kulturrinnen verwendeten Tröge 1 bzw. 1′ geschieht in der Weise, daß an einem flachliegenden Blechstreifen zunächst die die Halteausnehmungen 9 bildenden Löcher ausgestanzt werden. Bei der Ausführung nach Fig. 1 werden zusätzlich auch die Ausklinkungen 10 am Rand des Blechstreifens vorgenommen. Dann wird der Blechstreifen durch Abkanten oder Walzen so profiliert, daß er die in den Fig. 1 bzw. 2 dargestellte Profilform erhält. In diesem profilierten Zustand ist keine weitere Bearbeitung mehr erforderlich.

## Patentansprüche

1. Trog zur Aufnahme von Pflanzentöpfen (2), mit einem Trogboden (3) und Trogseitenwänden (5), die mit Halteausnehmungen (9,9′) versehen sind dadurch gekennzeichnet, daß von jeder Trogseitenwand (5) eine längsverlaufende Sicke (6, 6′) zum Troginneren vorspringt und daß die
Halteausnehmungen (9, 9′) für die Pflanzentöpfe aus den Sicken (6, 6′) ausgeschnitten sind.

2. Trog nach Anspruch 1, dadurch gekennzeichnet, daß die Halteausnehmungen (9, 9′) durch ausgestanzte Löcher im Bereich der inneren Kante (6a) der Sicke (6, 6′) gebildet werden.

3. Trog nach Anspruch 1, dadurch gekennzeichnet, daß die Sicken (6, 6′) im Querschnitt triangelförmig sind.

4. Trog nach Anspruch 1, dadurch gekennzeichnet, daß sich über jeder Sicke (6) ein oberer Seitenwandabschnitt (5a) anschließt, von dessen Oberkante (7) jeweils ein Halteflansch (8) nach innen vorspringt, in dem in Troglängsrichtung im Abstand zueinander Ausklinkungen (10) zur Aufnahme der Pflanzentöpfe ausgespart sind.

## Claims

1. Trough for holding plant pots (2), with a trough base (3) and trough side walls (5) which are provided with holding recesses (9, 9′), characterised in that from each trough side wall (5) a bead (6, 6′) running lengthwise projects to the inside of the trough and that the
holding recesses (9, 9′) are cut out from the beads (6, 6′).

2. Trough according to Claim 1, characterised in that the holding recesses (9, 9′) are formed by punched holes in the area of the inside edge (6a) of the bead (6, 6′).

3. Trough according to Claim 1, characterised in that the beads (6, 6′) are triangular in cross-section.

4. Trough according to Claim 1, characterised in that an upper section of the side wall is connected over each bead (6), from the top edge (7) of which a holding flange (8) in each case projects inwards, in which releases (10) are recessed in the longitudinal direction of the trough at a distance from each other for holding the plant pots.

## Revendications

1. Bac pour recevoir des pots de plantes (2) comportant un fond (3) et des parois latérales (5), qui est pourvu d évidements de retenue (9, 9′), caractérisé en ce qu'une moulure longitudinale (6, 6′) fait saillie de chaque paroi latérale (5) du bac à l'intérieur de celui-ci et en ce que les évidements de retenue (9, 9′) pour les pots de plantes sont découpés dans les moulures (6, 6′).

2. Bac selon la revendication 1, caractérisé en ce que les évidements de retenue (9, 9′) sont formés par des trous estampés dans la zone de l'arète interne (6a) de la moulure (6, 6′).

3. Bac selon la revendication 1, caractérisé en ce que les moulures (6, 6′) ont une section transversale triangulaire.

4. Bac selon la revendication 1, caractérisé en ce qu'à chaque moulure (6) se raccorde une section de paroi latérale supérieure (5a), de l'arète supérieure (7) de laquelle fait saillie vers l'intérieur un bord de retenue (8) dans lequel sont ménagées, à distance l'une de l'autre dans la direction longitudinale du bac, des encoches (10) pour recevoir les pots de plantes.
